# EUROPEAN PATENT SPECIFICATION

(11) **EP 1 866 368 B1**
(45) Date of publication and mention of the grant of the patent: **19.10.2016**
(21) Application number: 06726688.2
(22) Date of filing: 06.04.2006
(51) Int. Cl.: C08K 7/02, B29B 9/14, C08J 5/04, C08G 65/40, C08L 71/00

(54) **POLYMERIC MATERIALS**
POLYMERE MATERIALIEN
MATIERES POLYMERES

(30) Priority: 06.04.2005 GB 0506937
(43) Date of publication of application: 19.12.2007
(73) Proprietor: VICTREX MANUFACTURING LIMITED, Thornton Cleveleys Lancashire FY5 4QD (GB)
(72) Inventor: FLATH, Dianne, Elswick PR4 3ZP (GB); MEAKIN, Craig, Poulton-le-Fylde, Lancashire FY6 7HY (GB); WILSON, Brian, Garstang, Lancashire PR3 1JG (GB)
(74) Representative: Marsh, Andrew James
(86) International application number: PCT/GB2006/001285
(87) International publication number: WO 2006/106352

(56) References cited:
- US-A- 4 541 884
- US-A- 4 624 886
- US-A- 4 638 037

## Description

This invention relates to polymeric materials and particularly, although not exclusively, relates to compositions and composite materials which comprise a polymeric material.

It is well known to compound polymeric materials with fillers in order to provide composite materials having properties which are improved, at least in some respects, over the polymeric materials alone. For example, a polyaryletherketone such as polyetheretherketone is compounded with up to 30 wt% of glass fibres or carbon fibres. Such materials have been commercially available for many years from Victrex Plc under the names VICTREX PEEK 150GL30 and 150CA30 respectively. These materials include polyetheretherketone having an MV of 0.15 kNsm⁻² and 30 wt% of fibrous filler.

It is difficult to incorporate greater than 30 wt% of filler materials into a polymeric material such as polyetheretherketone because the molten composite is too viscous for standard melt processing equipment and/or due to difficulties in fully wetting out filler materials. These problems have been addressed in the prior art as discussed further below.

US 4541884 (Cogswell) recognises the difficulties associated with achieving rapid impregnation of a fibre tow or roving if the viscosity of the melt of a polymer used is too high. The problem is solved by drawing a plurality of continuous filaments through a melt comprising a mixture of a thermoplastic polymer and a comprising a mixture of a thermoplastic polymer and a relatively high level of plasticizer for the polymer which is thermally stable but which can be volatilised from the composition. Use of the plasticizer plasticizes the polymer in the melt and gives a melt of reduced viscosity compared with the melt viscosity of the polymer alone. The document describes, in Example 1, the use of a mixture of polyetheretherketone (70 wt%) having a MV of 110 Ns/m² and diphenylsulphone (30 wt%) as plasticizer; and also in Example 3, the use of polyetheretherketone (100 parts by weight (pbw)) having a MV of 25 Ns/m², and diphenylsulphone (100 pbw). Fibre loadings as high as 69 wt% are described. Disadvantageously, use of the process described requires use (and disposal of) large amounts of plasticizer with consequential increased costs of the process.

US 4624886 (Cogswell) describes a process for impregnating a fibrous product, said fibrous product being a fabric woven from reinforcing fibres or a fabric of randomly disposed fibres, with a matrix polymer comprising causing partial impregnation of the fibrous structure by introducing the fibrous structure into a molten composition comprising the matrix polymer and a melt plasticizer for the matrix polymer and subsequently causing substantially complete wetting of the filaments of the fibrous structure by volatilizing the melt plasticizer from the partially impregnated structure at a temperature at which the polymer is molten, the melt plasticizer being thermally stable at the temperature of the melt and having volatility characteristics such that the plasticizer can be removed below the decomposition temperature of the melt but sufficiently involatile at the temperature of the melt to permit the viscosity of the melt to be reduced by comparison with the melt viscosity of the polymer at the same temperature. When a woven fabric is employed thermoformable composites can be obtained having short beam shear strength values at least 0.7 times the tensile strength of the plastics matrix material of the composite.

US 4638037 (Ward) describes a method of increasing the molecular weight of a poly(aryl ether) comprising providing a mixture of (1) at least one polyaryl ether comprising polymer chains having end groups selected from groups of formula -Ar-X, preferably -Y-Ar-X and -Ar-OX and (2) a reagent having nucleophilic activity selected from (a) alkaline salts of Group I or Group II metals (as hereinafter defined) and (b) reagents have radicals -X and -OZ, reactive respectively with the end groups -Ar-OZ and -Ar-X, wherein when the end group is -Ar-X the reagent is either a difunctional reagent having either both end groups in the form of reactive -OZ groups or a difunctional reagent having one reactive -OZ group and one reactive -X group and when the end group is -Ar-OZ the reagent is a difunctional reagent having reactive end groups -X, and wherein Ar represents an arylene radical, preferably a phenylene radical, X is a monovalent radical capable of nucleophilic diplacement from Ar, preferably selected from halogen, nitrile (CN) or nitro (NO₂) radicals, Y is an electron withdrawing group, which when Ar is phenylene is positioned ortho or para, preferably para to the X group and when Ar is not phenylene, X and Y are attached to the Ar group by parallel and oppositely directed bonds and Z is a univalent metal, and heating the mixture to a temperature above the melting point of the polymer until a desired increase in molecular weight has occurred. The method is useful for preparing fibre reinforced compositions and particularly for the process of impregnating fibre structures.

US 5213889 (Cogswell) solves the same problem by using a thermoplastic polymer having a very low melt viscosity, of less than 30 Ns/m² and preferably in the range 1 to 10 Ns/m² to enable wetting of the filaments. The disclosure envisages processing steps to increase the molecular weight of the polymer, after preparation of the composite, to improve its properties.

More recently, US 5844036 (Hughes) has addressed the problem of providing highly filled composites of polyaryletherketones to improve their properties. The solution involves using a polyaryletherketone matrix and two types of fillers each said to provide unique properties. The first filler is a reinforcing filler which provides high strength and stiffness. The second filler is a non-thermoplastic immobilizing filler to immobilise the amorphous portion of the partially crystalline polyaryletherketone polymer and provide resistance to high temperature absorption. The document describes the use of polyetheretherketone grade PEEK^{™} 150FP from ICI Victrex which has an MV of 0.15 kNsm⁻². Disadvantageously, Hughes is limited in its application to the use of two different types of fillers having two specific properties described.

It is an object of the present invention to address problems associated with polymeric materials and particularly, although not exclusively, with filled composite materials.

According to a first aspect of the invention, there is provided a method of preparing a composite material as set out in claim 1.

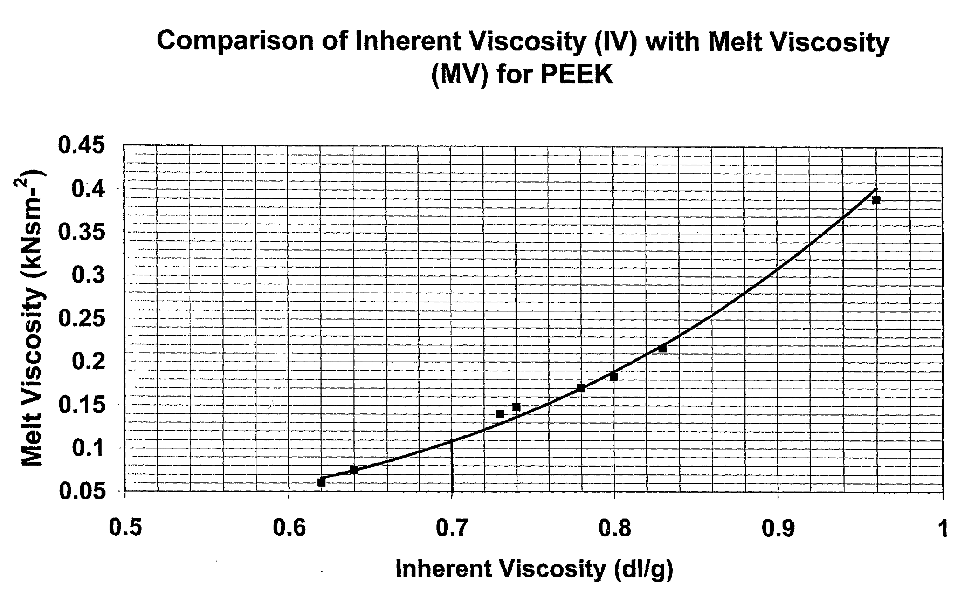

Although the invention is described in terms of MV this may be equated approximately to IV (measured as described in EP0001879B) in accordance with figure 1 hereinafter.

In the method at least 1 kg, preferably at least 5 Kg, more preferably at least 10 Kg, especially at least 25 Kg of said polymeric material is selected. In the method, at least 1 Kg, preferably at least 5 Kg, more preferably at least 10 Kg, especially at least 25 kg of said filler means is selected.

Suitably at least 5 kg (preferably at least 10 kg, especially at least 25 kg) of said polymeric material is selected and contacted with at least 5 kg (preferably at least 10 kg, especially at least 25 kg) of said filler means.

In the method a batch of composite material may be prepared having a weight of at least 10 kg, preferably at least 20 kg, especially at least 50 kg.

The method may comprise forming said composite material into a particulate form, for examples granules or pellets. The particulate form may comprise particles having an average weight of at least 0.5mg, preferably at least 1.0mg, more preferably at least 1.5mg. The average weight may be less than 100mg, suitably less than 60mg, preferably less than 40mg.

The particulate form may have an average volume in the range 5 to 100mm³, preferably 10 to 50mm³, more preferably 15 to 35mm³.

The mass of composite material in said particulate form may be provided in a pack. Said pack may contain at least 10,000 suitably at least 50,000, preferably at least 250,000 particles of said composite material in said particulate form. The pack may contain less than 1,000,000 particles.

Said polymeric material suitably has a MV of at least 0.06 kNsm⁻², preferably has a MV of at least 0.07 kNsm⁻², more preferably at least 0.08 kNsm⁻².

Said polymeric material preferably has a MV in the range 0.085 to 0.095 kNsm⁻².

Said polymeric material may have a tensile strength, measured in accordance with ASTM D790 of at least 80 MPa. The tensile strength is preferably in the range 80-110 MPa, more preferably in the range 80-100 MPa.

Said polymeric material may have a flexural strength, measured in accordance with ASTM D790 of at least 145 MPa. The flexural strength is preferably in the range 145-180 MPa, more preferably in the range 145-165 MPa.

Said polymeric material may have a flexural modulus, measured in accordance with ASTM D790, of at least 3.5 GPa. The flexural modulus is preferably in the range 3.5-4.5 GPa, more preferably in the range 3.5-4.1 GPa.

Preferably, said polymeric material has a moiety of formula 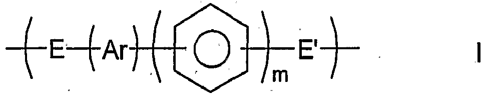 and/or a moiety of formula 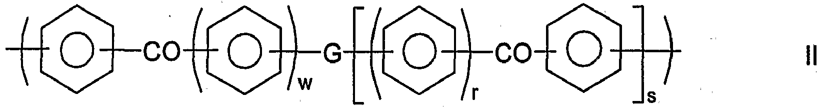 wherein m,r,s and w independently represent zero or a positive integer, E and E' independently represent an oxygen atom or a direct link, G represents an oxygen atom, a direct link or a -O-Ph-O- moiety where Ph represents a phenyl group and Ar is selected from one of the following moieties (i) to (vi) which is bonded via one or more of its phenyl moieties to adjacent moieties

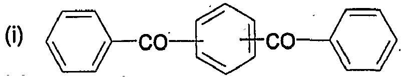

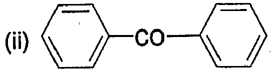

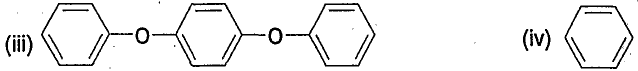

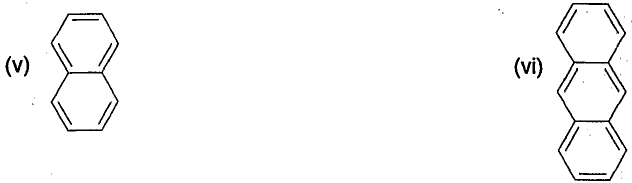

Unless otherwise stated in this specification, a phenyl moiety has 1,4-, linkages to moieties to which it is bonded.

In (i), the middle phenyl may be 1,4- or 1,3-substituted. It is preferably 1,4-substituted.

Said polymeric material may include more than one different type of repeat unit of formula I; and more than one different type of repeat unit of formula II. Preferably, however, only one type of repeat unit of formula I or II is provided.

Said moieties I and II are suitably repeat units. In the polymeric material, units I and II are suitably bonded to one another - that is, with no other atoms or groups being bonded between units I and II.

Where w is greater than zero, the respective phenylene moieties may independently have 1,4- or 1,3-linkages to the other moieties in the repeat units of formulae II. Preferably, said phenylene moieties have 1,4- linkages.

Suitably, "a" represents the mole % of units of formula I in said polymeric material, suitably wherein each unit I is the same; and "b" represents the mole % of units of formula II in said polymeric material, suitably wherein each unit II is the same. Preferably, a is in the range 45-100, more preferably in the range 45-55, especially in the range 48-52. Preferably, b is in the range 0-55, more preferably in the range 45-55, especially in the range 48-52. Preferably, the ratio of a to b is in the range 0.9 to 1.1 and, more preferably, is about 1. Suitably, the sum of a and b is at least 90, preferably at least 95, more preferably at least 99, especially about 100. Preferably, said polymeric material consists essentially of moieties I and II.

Said polymeric material may be a homopolymer having a repeat unit of general formula 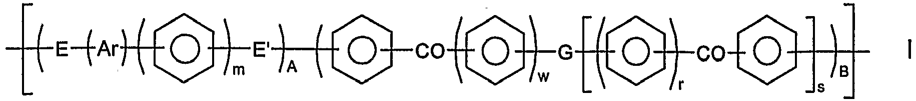 or a random or block copolymer of at least two different units of IV, wherein A and B independently represent 0 or 1 and E,E',G,Ar,m,r,s and w are as described in any statement herein.

As an alternative to a polymeric material comprising unit(s) IV discussed above, said polymeric material may be a homopolymer having a repeat unit of general formula 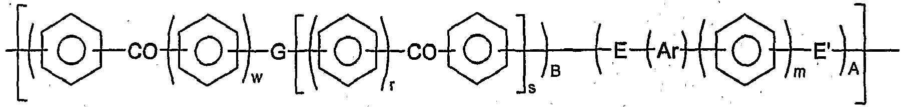 or a random or block copolymer of at least two different units of IV* wherein A and B, independently represent 0 or 1 and E, E', G, Ar, m, r, s and w are as described in any statement herein.

Preferably, m is in the range 0-3, more preferably 0-2, especially 0-1. Preferably, r is in the range 0-3, more preferably 0-2, especially 0-1. Preferably, s is 0 or 1. Preferably, w is 0 or 1.

Preferably, said polymeric material is a homopolymer having a repeat unit of general formula IV.

Preferably Ar is selected from the following moieties (vii) to (xiii):

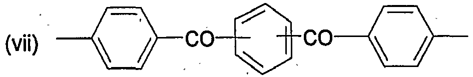

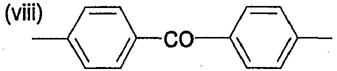

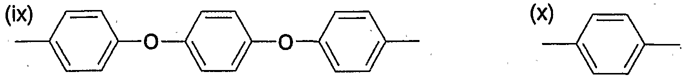

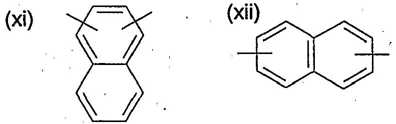

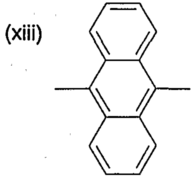

In (vii), the middle phenyl may be 1,4- or 1,3-substituted. It is preferably 1,4-substituted.

Preferably, (xi) is selected from a 1,2-, 1,3-, or a 1,5-moiety; and (xii) is selected from a 1,6-, 2,3-, 2,6- or a 2,7- moiety.

Suitable moieties Ar are moieties (i), (ii), (iii) and (iv) and, of these, moieties (i), (ii) and (iv) are preferred. Other preferred moieties Ar are moieties (vii), (viii), (ix) and (x) and, of these, moieties (vii), (viii) and (x) are especially preferred.

An especially preferred class of polymeric material are polymers (or copolymers) which consist essentially of phenyl moieties in conjunction with ketone and/or ether moieties. That is, in the preferred class, the polymeric material does not include repeat units which include -S-, - SO₂- or aromatic groups other than phenyl. Preferred polymeric materials of the type described include:
(a) a polymer consisting essentially of units of formula IV wherein Ar represents moiety (iv), E and E' represent oxygen atoms, m represents 0, w represents 1, G represents a direct link, s represents 0, and A and B represent 1 (i.e. polyetheretherketone).
(b) a polymer consisting essentially of units of formula IV wherein E represents an oxygen atom, E' represents a direct link, Ar represents a moiety of structure (i), m represents 0, A represents 1, B represents 0 (i.e. polyetherketone);
(c) a polymer consisting essentially of units of formula IV wherein E represents an oxygen atom, Ar represents moiety (i), m represents 0, E' represents a direct link, A represents 1, B represents 0, (i.e. polyetherketoneketone).
(d) a polymer consisting essentially of units of formula IV wherein Ar represents moiety (i), E and E' represent oxygen atoms, G represents a direct link, m represents 0, w represents 1, r represents 0, s represents 1 and A and B represent 1. (i.e. polyetherketoneetherketoneketone).
(e) a polymer consisting essentially of units of formula IV, wherein Ar represents moiety (iv), E and E' represents oxygen atoms, G represents a direct link, m represents 0, w represents 0, s, r, A and B represent 1 (i.e. polyetheretherketoneketone).
(f) a polymer comprising units of formula IV, wherein Ar represents moiety (iv), E and E' represent oxygen atoms, m represents 1, w represents 1, A represents 1, B represents 1, r and s represent 0 and G represents a direct link (i.e. polyetherdiphenyl-ether-phenyl-ketone-phenyl-).

Said polymeric material is preferably semi-crystalline. The level and extent of crystallinity in a polymer is preferably measured by wide angle X-ray diffraction (also referred to as Wide Angle X-ray Scattering or WAXS), for example as described by Blundell and Osborn (Polymer 24, 953, 1983). Alternatively, crystallinity may be assessed by Differential Scanning Calerimetry (DSC).

The level of crystallinity in said polymeric material may be at least 1%, suitably at least 3%, preferably at least 5% and more preferably at least 10%. In especially preferred embodiments, the crystallinity may be greater than 30%, more preferably greater than 40%, especially greater than 45%.

The glass transition temperature (Tg) of said polymeric material may be at least 140°C, suitably at least 144°C. In some cases it may be greater than 154°C, 160°C, 164°C, 170°C, 190°C or greater than 250°C or even 300°C. In a preferred embodiment, the glass transition temperature is in the range 140°C to 145°C.

The main peak of the melting endotherm (Tm) for said polymeric material (if crystalline) may be at least 300°C.

Said polymeric material may consist essentially of one of units (a) to (f) defined above. Alternatively, said polymeric material may comprise a copolymer comprising at least two units selected from (a) to (f) defined above. Preferred copolymers include units (a) For example, a copolymer may comprise units (a) and (f); or may comprise units (a) and (e).

Said polymeric material preferably comprises, more preferably consists essentially of, a repeat unit of formula 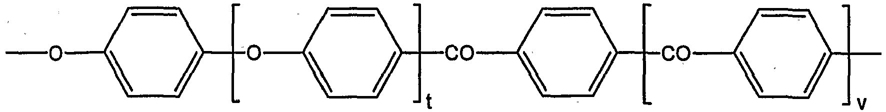 where t and v independently represent 0 or 1. Preferred polymeric materials have a said repeat unit wherein either t=1 or v=0; t=0 and v=0; or t=0 and v=1. More preferred have t=1 and v=0; or t=0 and v=0. The most preferred has t=1 and v=0.

In preferred embodiments, said polymeric material is selected from polyetheretherketone, polyetherketone and polyetherketoneketone. In a more preferred embodiment, said polymeric material is selected from polyetherketone and polyetheretherketone. In an especially preferred embodiment, said polymeric material is polyetheretherketone.

Said filler means may include a fibrous filler or a non-fibrous filler. Said filler means may include both a fibrous filler and a non-fibrous filler.

A said fibrous filler is discontinuous.

A said fibrous filler may be selected from inorganic fibrous materials, non-melting and high-melting organic fibrous materials, such as aramid fibres, and carbon fibre.

A said fibrous filler may be selected from glass fiber, carbon fibre, asbestos fiber, silica fiber, alumina fiber, zirconia fiber, boron nitride fiber, silicon nitride fiber, boron fiber, fluorocarbon resin fibre and potassium titanate fiber. Preferred fibrous fillers are glass fibre and carbon fibre.

A fibrous filler may comprise nanofibres.

A said non-fibrous filler may be selected from mica, silica, talc, alumina, kaolin, calcium sulfate, calcium carbonate, titanium oxide, ferrite, clay, glass powder, zinc oxide, nickel carbonate, iron oxide, quartz powder, magnesium carbonate, fluorocarbon resin, graphite, carbon powder, nanotubes and barium sulfate. The non-fibrous fillers may be introduced in the form of powder or flaky particles.

Said composite material could be prepared as described in PCT/GB2003/001872, the contents of which are incorporated herein by reference. Preferably, in the method, said polymeric material and said filler means are mixed at an elevated temperature, suitably at a temperature at or above the melting temperature of said polymeric material. Thus, suitably, said polymeric material and filler means are mixed whilst the polymeric material is molten. Said elevated temperature is suitably below the decomposition temperature of the polymeric material. Said elevated temperature is preferably at or above the main peak of the melting endotherm(Tm) for said polymeric material. Said elevated temperature is preferably at least 300°C and more preferably is at least 350°C. Advantageously, the molten polymeric material can readily wet the filler and/or penetrate consolidated fillers, such as fibrous mats or woven fabrics, so the composite material prepared comprises the polymeric material and filler means which is substantially uniformly dispersed throughout the polymeric material.

The composite material may be prepared in a substantially continuous process. In this case polymeric material and filler means may be constantly fed to a location wherein they are mixed and heated. An example of such a continuous process is extrusion. Another example (which may be particularly relevant wherein the filler means comprises a fibrous filler) involves causing a continuous filamentous mass to move through a melt comprising said polymeric material. The continuous filamentous mass may comprise a continuous length of fibrous filler or, more preferably, a plurality of continuous filaments which have been consolidated at least to some extent. The continuous fibrous mass may comprise a tow, roving, braid, woven fabric or unwoven fabric. The filaments which make up the fibrous mass may be arranged substantially uniformly or randomly within the mass.

Alternatively, the composite material may be prepared in a discontinuous process. In this case, a predetermined amount of said polymeric material and a predetermined amount of said filler means may be selected and contacted and a composite material prepared by causing the polymeric material to melt and causing the polymeric material and filler means to mix to form a substantially uniform composite material.

The composite material may be formed into a particulate form for example into pellets or granules. Pellets or granules may have a maximum dimension of less than 10mm, preferably less than 75mm, more preferably less than 50mm.

Preferably, said filler means comprises one or more fillers selected from glass fibre, carbon fibre, carbon black and a fluorocarbon resin. More preferably, said filler means comprises glass fibre or carbon, discontinuous, for example chopped, glass fibre or carbon fibre. Preferred discontinuous fibres have an average length before contact with the polymeric material, of less than 7mm. The average length
may be greater than 1mm, preferably greater than 2mm. Preferably, a fibrous filler means consists essentially of fibers having a length, before contact with the polymeric material, of less than 10mm.

Said composite material may comprise one or more different polymeric materials of a type described above with MV as described. Preferably, said composite material comprises only a single type of polymeric material. Said single type is preferably polyetheretherketone.

Said composite material suitably includes 70wt% or less, suitably 65 wt% or less, preferably 55 wt% or less, more preferably 45 wt% or less, especially 35 wt% or less of said polymeric material (especially polyetheretherketone). Said composite material suitably includes at least 35 wt%, preferably at least 45 wt%, more preferably at least 55 wt%, especially at least 65 wt%. of filler means which may include different types of fillers (in which case the wt% refers to the sum of the wt% of each filler present), but preferably comprises the same type of filler.

Said composite material suitably includes 20 to 60wt% of polymeric material having a MV as described, (which is preferably a single type of polymeric material, especially polyetheretherketone) and 40 to 60wt% of filler means. Preferably, said composite material comprises 20 to 50wt% of polymeric material and 50 to 80wt% of filler means. More preferably, said composite material comprises 20 to 45wt% of polymeric material and 55 to 80wt% of filler means.

The ratio of the wt% of said polymeric material having a MV as described to the wt% of filler means may be in the range 0.6 to 1.6, preferably 0.65 to 1.5. Preferably the ratio of the wt% of said polymeric material having a MV as described is 1, or preferably less than 1.

A mixture, prepared after contacting said polymeric materials and said filler means suitably includes less than 1 wt%, preferably less than 0.9 wt%, more preferably less than 0.7 wt%,. especially less than 0.5 wt% of a plasticizer for the polymeric material (e.g, a material which will enable a melt to be obtained from a said polymeric material having a lower melt viscosity than that of the polymeric material alone measured under the same conditions), for example diphenylsulphone. Preferably, in the method, substantially no plasticizer, for example diphenylsulphone, is added to either the polymeric material or a mixture comprising said polymeric material.

A mixture, prepared after contacting said polymeric material and said filler means, suitably includes less than 0.005 parts by weight (pbw) of an alkaline salt of a Group I or Group II metal per 100 pbw of said polymeric material. Said mixture preferably does not include any salt present at concentrations of greater than 0.005 pbw per 100 pbw of said polymeric material. Preferably, said mixture includes less than 0.004 pbw, more preferably less than 0.003 pbw, especially less than 0.001 pbw. Preferably, no salt, for example an alkaline salt of a Group I or Group II metal, is added to the mixture or any component thereof used to make the composite material in the method.

The method of the first aspect preferably produces a composite material which includes a low level of Group I or Group II metal ions. Said composite material suitably includes less than 1000 ppm, preferably less than 500 ppm, more preferably less than 150 ppm of any alkali metal cation (e.g. Na⁺, Lᵢ⁺ or K⁺) in it, said ppm being based on the amount of said polymeric material in said composite. Said composite material suitably includes less than 1000 ppm, preferably less than 500 ppm, more preferably less than 150 ppm of any Group II metal cation (e.g. Ca²⁺) in it, said ppm being based on the amount of said polymeric material in said composite. Preferably, the sum of the ppm of all Group I and Group II metal cations in said composite material is less than 2000 ppm, preferably less than 1000 ppm, more preferably less than 500 ppm, especially less than 250 ppm.

The levels of ions in ppm described may be assessed using ICPAES (Inductive Coupling Plasma Atomic Emission Spectroscopy).

According to a second aspect of the invention, there is provided a composite material as set out in claim 23.

According to a third aspect of the invention, there is provided a composite material as set out in claim 24.

A composite material outside the scope of the present invention comprises:
(i) a polymeric material having a melt viscosity (MV) in the range of 0.05 to 0.12 kNsm⁻²; and
(ii) a filler means;
wherein said polymeric material is of a type which includes unsubstituted phenyl moieties, carbonyl moieties and ether moieties in the polymeric backbone of said polymeric material.

The composite materials of the second and third aspects may have any feature of the composite material of the first aspect.

A composite material outside the scope of the present invention comprises:
(i) a polymeric material having a MV in the range 0.06 to 0.11 kNsm⁻², preferably a material selected from polyetheretherketone, polyetherketone and polyetherketoneketone;
(ii) at least 45 wt%, preferably at least 55 wt%, of a filler means, preferably a fibrous filler means, more preferably a discontinuous fibrous filler means;
wherein the composite material includes less than 1000 ppm of any Group I metal cation; and less than 1000 ppm of any Group II metal cation.

The composite material may advantageously be used in injection moulding or extrusion to manufacture components. Thus, according to a fourth aspect of the invention, there is provided a method of making a component, the method comprising extruding or injection moulding a composite material as described according to the first, second and/or third aspects.

Said composite material may have any feature of said composite material described according to any of the above aspects.

Said method preferably involves selecting a precursor material from which to make the component wherein said precursor material comprises a said composite material and subjecting the precursor material to a temperature to melt polymeric material in said composite material in an extrusion or injection moulding apparatus. Suitably, said precursor material is heated to a temperature of greater than 300°C, preferably greater than 340°C. It is suitably heated to a temperature not exceeding 450°C.

Said precursor material may consist essentially of a said composite material described herein.

Suitably, in the method, at least 0.5g, preferably at least 1g, more preferably at least 5g, especially at least 12g is selected in order to make the component.

Preferably, the component made comprises at least 25g, more preferably at least 50g of said composite material.

The method may be used to make components having relatively thin walls. Thus, the invention, in a fifth aspect relates to a method of making a component which has a wall which includes a region having a thickness of 3mm or less, the method comprising:
(A) selecting a precursor material as described according to the third aspect.
   AND
(B) treating said precursor material, thereby to form said component.

Preferably, the component includes a region having a thickness of 2mm or less, more preferably 1mm or less.

Said treatment described in (B) preferably involves melt processing said precursor material. Melt processing is preferably carried out by extrusion or injection moulding.

Suitably, said component includes a region having an area of at least 0.5cm², preferably at least 1 cm², more preferably at least 5cm² having a thickness as described. Thus, in one embodiment, said component may include a region of at least 0.5cm² which has a thickness of 3mm, preferably of 2mm or less.

A said polymeric material as described herein may be made by any suitable method. An electrophilic process may be used as described in US6566484B2; or a nucleophilic process may be used as described in EP00001879B or PCT/GB99/02833. A nucleophilic process is preferred.

MV may be controlled as described in EP 0001879B.

Any feature of any aspect of any invention or embodiment described herein may be combined with any feature of any aspect of any other invention or embodiment described herein mutatis mutandis.

Specific embodiments of the invention will now be described by way of example, with reference to the accompanying figure which is a plot illustrating the relationship between MV and IV.

VICTREX PEEK 150P (Trade Mark), Victrex PEEK 150GL30 (Trade Mark) and Victrex PEEK 150CA30 may be obtained from Victrex Plc, UK.

All chemicals referred to herein were used as received from Sigma-Aldrich Chemical Company, Dorset, UK, unless otherwise stated.

### Example 1 - Preparation of polyetheretherketone

A 250ml flanged flask fitted with a ground glass Quickfit lid, stirrer/stirrer guide, nitrogen inlet and outlet was charged with 4,4'-difluorobenzophenone (22.48g, 0.103 mole), hydroquinone (11.01g, 0.1 mole) and diphenylsulphone (49g) and purged with nitrogen for over 1 hour. The contents where then heated under a nitrogen blanket to between 140 and 150°C to form an almost colourless solution. While maintaining a nitrogen blanket, dried sodium carbonate (10.61g, 0.1 mole) and potassium carbonate (0.278g, 0.002 mole) was added. The temperature was raised to 200°C and held for 1 hour; raised to 250°C and held for 1 hour; raised to 315°C and maintained for 2 hour.

The reaction mixture was allowed to cool, milled and washed with acetone and water. The resulting polymer was dried in an air oven at 120°C producing a powder. The polymer had a melt viscosity at 400°C, 1000sec⁻¹ of 0.089 kNsm⁻².

The polymer was compression moulded at 400°C in a press (20tonnes, 5 minutes) into a thin film approximately 0.2mm thick and cooled from 400°C to 120°C in 30 minutes to induce complete crystallisation and then allowed to cool to room temperature.

The film was then hinged through 180° followed by hinging through 360°C. This process was repeated 5 times and the film survived without breaking and was therefore considered to be tough.

### Example 2a-d - Preparation of samples of polyetheretherketone with different melt viscosities

The procedure described in Example 1 was repeated except the polymerisation time was varied to produce polyetheretherketone with different melt viscosities. The details are given in Table 1 below.

**Table 1**

| Example | Reaction Time (mins) | Melt Viscosity (kNsm⁻²) | Toughness Test |
|---|---|---|---|
| 1 | 120 | 0.089 | Tough |
| 2a | 180 | 0.150 | Tough |
| 2b | 160 | 0.117 | Tough |
| 2c | 90 | 0.075 | Brittle |
| 2d | 60 | 0.06 | Brittle |

### Example 3 - Large Scale production of polyetheretherketone

The procedure described in Example 1 was repeated on a larger scale to produce sufficient material to carry out mechanical and melt flow testing. Five batches were produced, Examples 3a-e, with Melt Viscosities measured at 400°C and 1000s⁻¹ of 0.144, 0.110 0.089, 0.076 and 0.059kNsm⁻² respectively.

### Example 4a-d - Melt Flow Index of polyetheretherketones

The Melt Flow Index of the polyetheretherketone samples from Examples 3c,3e, a sample of Victrex PEEK 150P and blends of Examples 3d and 3a in a weight ratio of 77: 23 and Examples 3e and 3a in a weight ratio of 64 : 36 were measured on a CEAST Melt Flow Tester 6941.000. The polymer was placed in the barrel of the Melt Flow Tester apparatus and heated to 400°C. The polymer was then extruded under a constant shear stress by inserting a weighted piston (2.16kg) into the barrel and extruding through a tungsten carbide die, 2.095mmbore x 8.000mm. The MFI (Melt Flow Index) is the average mass of polymer (in g) extruded in 10 min. The results are detailed in Table 2 below.

**Table 2**

| Example | Polyetheretherketone Sample | Melt Viscosity (kNsm⁻²) | Melt Flow Index (g/10mins) |
|---|---|---|---|
| 4a | Example 3c | 0.089 | 87 |
| 4b | Example 3e | 0.059 | 117 |
| 4c | Example 3d (77wt%) + Example 3a (23wt%) | 0.09 | 83 |
| 4d | Example 3e (64wt%) + Example 3a (36wt%) | 0.09 | 78 |
| 4e | Victrex PEEK 150P | 0.150 | 41 |

### Example 5 - Spiral Flow of Low viscosity polyetheretherketones

Spiral flow measurements were made on a spiral flow mould at a melt temperature of 370 and 390°C and 1 and 2mm mould depth at a mould temperature of 185°C with an injection pressure of 140Bar and the flow length determined. The results are detailed in Table 3 below.

**Table 3**

| Example | Polyetheretherketone Sample | Mould Temperature (°C) | Mould Depth | Flow Length (mm) |
|---|---|---|---|---|
| 5a | Ex3e(64wt%) + Ex3a (36wt%) | 370 | 1mn | 302 |
| 5b | Victrex PEEK 150P | 370 | 1mm | 239 |
| 5c | Ex3e(64wt%) + Ex3a(36wt%) | 370 | 2mm | 834 |
| 5d | Victrex PEEK 150P | 370 | 2mm | 514 |
| 5e | Ex3e(64wt%) + Ex3a(36wt%) | 390 | 1mm | 315 |
| 5f | Victrex PEEK 150P | 390 | 1mm | 263 |
| 5g | Ex3e(64wt%) + Ex3a(36wt%) | 390 | 2mm | >1000 |
| 5h | Victrex PEEK 150P | 390 | 2mm | 727 |

### Examples 6a-e - Mechanical Properties of Low Viscosity polyetheretherketones

Samples of polyetheretherketone from Examples 3c, 3d, 3e, Victrex PEEK 150P, the 60:40wt% blend of Example 3d and 3b the 30:30:30:10wt% blend of Examples 3b, 3c, 3d and 3e, the 77:23wt% blend of Example 3d and 3a and the 64:36wt% blend of Example 3e and 3a were injection moulded using a barrel temperature of 350-360°C, nozzle temperature 365°C, mould temperature 145-155°C, holding pressure 30Bar, injection pressure of 140Bar and a screw speed of 45rpm to produce standard test pieces for mechanical property evaluation. The results are detailed in Table 4 below.

**Table 4**

| Example | Polyetheretherketone Sample | Melt Viscosity (kNsm⁻²) | Tensile Strength (MPa)^{(a)} | Flexural Strength (MPa)^{(b)} | Flexural Modulus (GPa)^{(b)} |
|---|---|---|---|---|---|
| 6a | Example 3c | 0.089 | 90.0 | 157.9 | 4.0 |
| 6b | Example 3d | 0.076 | 98.1 | 149.8 | 3.7 |
| 6c | Example 3b (40wt%) + Example 3d (60wt%) | 0.09 | | 154.6 | 4.1 |
| 6d | Example 3e | 0.059 | 100.6 | 149.2 | 3.7 |
| 6e | Ex3b (30wt%)+ | | | | |
| | Ex3c (30wt%)+ | 0.092 | 107.6 | 154.6 | 4.0 |
| | Ex3d (30wt%)+ | | | | |
| | Ex3e (10wt%)+ | | | | |
| 6f | Example 3d (77wt%) + Example 3a (23wt%) | 0.09 | 98.3 | 147.7 | 3.7 |
| 6g | Example 3e (64wt%) + Example 3a (36wt%) | 0.09 | 97.8 | 149.0 | 3.7 |
| 6h | Victrex PEEK 150P | 0.150 | 98.5 | 149.1 | 3.9 |

| | | | | | |
|---|---|---|---|---|---|
| (a) ASTM D638 (b) ASTM D790 | | | | | |

### Example 7a - d - Melt Flow Index and Mechanical Properties of filled, low viscosity polyetheretherketones

The polyetheretherketone from the 64:36wt% blend of Example 3e and 3a was compounded separately with 30wt% glass fibre (Owens Corning OCP CS D165-11C) and 30wt% carbon fibre (SGL Sigrafil C25 S006 APS) on a ZSK 25 WLE Twin Screw Extruder, Examples 7a and 7c respectively. The Melt Flow Index of the two compounds at 400°C and 2.16kg was determined and compared to Victrex PEEK 150GL30 and 150CA30 which are commercial grades of polyetheretherketone containing 30wt% glass fibre and carbon fibre respectively. The results are detailed in Table 5 below.

Compounds Example 7a and 7d were injection moulded using a barrel temperature of 370-380°C, nozzle temperature 380°C, mould temperature 180-200°C, holding pressure 30Bar, injection pressure 140Bar and a screw speed of 45rpm into standard test pieces and their mechanical properties determined and compared to those of to Victrex PEEK 150GL30 and 150CA30. The results are detailed in Table 5 below.

**Table 5**

| Example | Polyetheretherketone Sample | Melt Flow Index (g/10min) | Tensile Strength (MPa)^{(a)} | Flexural Strength (MPa)^{(b)} | Flexural Modulus (GPa)^{(b)} |
|---|---|---|---|---|---|
| 7a | Blend [3e(64wt%) +3a(36wt%]](70wt%)+ Glass Fibre (30wt%) | 30 | 155.8 | 242.1 | 10.2 |
| 7b | Victrex PEEK 150GL30 | 14 | 163.5 | 252.5 | 10.0 |
| 7c | Blend [3e(64wt%) +3a(36wt%]](70wt%)+ Carbon Fibre (30wt%) | 30 | 202.4 | 304.5 | 16.9 |
| 7d | Victrex PEEK 150CA30 | 12 | 208.6 | 312.7 | 18.7 |

| | | | | | |
|---|---|---|---|---|---|
| (a) ASTM D638 (b) ASTM D790 | | | | | |

### Example 8a - g - Melt Flow Index and Mechanical Properties of highly filled, low viscosity polyetheretherketones

The polyetheretherketone from the 64:36wt% blend of Example 3e and 3a was compounded separately with 40wt%, 50wt%, 60wt% and 70wt% glass fibre (Owens Corning OCF D165A-11C)and 40wt%, 50wt% and 60wt% carbon fibre (SGL Sigrafil C25 S006 APS) on a ZSK 25 WLE Twin Screw Extruder, Examples 8a - 8g respectively. The Melt Flow Index of the compounds at 400°C and 2.16kg was determined and compared to Victrex PEEK^{™} 150GL30 and 150CA30 which are commercial grades of polyetherketone containing 30wt% glass fibre and carbon fibre respectively. The results are detailed in Tables 6a and 6b below.

Compounds Example 8a - 8g were injection moulded using a barrel temperature of 370-380°C, nozzle temperature 380°C, mould temperature 180-200°C, holding pressure 30Bar and a screw speed of 45rpm into standard test pieces and their mechanical properties determined and compared to those of Victrex PEEK 150GL30 and 150CA30. The results are detailed in Table 6a and 6b below.

**Table 6a**

| Example | Polyetheretherketone Sample (%wt)^{(a)} | Glass Fibre (wt%) | Melt Flow Index (g/10min) | Tensile Strength (MPa)^{(b)} | Flexural Strength (MPa)^{(c)} | Flexural Modulus (GPa)^{(c)} | Notched Izod (kJ/m²)^{(d)} |
|---|---|---|---|---|---|---|---|
| 8a | 60 | 40 | 26.9 | 211 | 314 | 13.7 | 12.6 |
| 8b | 50 | 50 | 17.9 | 228 | 327 | 17.4 | 13.4 |
| 8c | 40 | 60 | 11.9 | 227 | 342 | 21.8 | 12.5 |
| 8d | 30 | 70 | 7.8 | 198 | 320 | 26.0 | 8.9 |
| Victrex PEEK 150GL30 | | | 14 | 163.5 | 252.5 | 10.0 | 8.8 |

| | | | | | | | |
|---|---|---|---|---|---|---|---|
| (a) Polyetheretherketone sample Blend 3e(64wt%)+3a(36wt%) (b) ISO 527 (c) ISO 178-1993(E) (d) ISO 180 | | | | | | | |

**Table 6b**

| Example | Polyetheretherketone Sample (%wt)^{(a)} | Carbon Fibre (wt%) | Melt Flow Index (g/10min) | Tensile Strength (MPa)^{(b)} | Flexural Strength (MPa)^{(c)} | Flexural Modulus (GPa^{(c)} | Notched Izod (kJ/m²)^{(d)} |
|---|---|---|---|---|---|---|---|
| 8e | 60 | 40 | 17 | 229 | 338 | 25.1 | 7.8 |
| 8f | 50 | 50 | 6.5 | 229 | 354 | 31.3 | 6.8 |
| 8g | 40 | 60 | 4.8 | 221 | 357 | 36.8 | 6.3 |
| Victrex PEEK 150CA30 | | | 12 | 208.6 | 312.7 | 18.7 | 7.9 |

| | | | | | | | |
|---|---|---|---|---|---|---|---|
| (a) Polyetheretherketone sample Blend 3e(64wt%)+3a(36wt%) (b) ISO 527 (c) ISO 178-1993(E) (d) ISO 180 | | | | | | | |

### Example 9a - b - Melt Flow Index and Mechanical Properties of mica filled, low viscosity polyetheretherketones

The polyetheretherketones from the 64:36wt% blend of Examples 3e and 3a, and Victrex 150P were compounded with 30wt% mica (CAMP, microns mica 325 mesh) on a ZSK 25 WLE Twin Screw Extruder, Examples 9a - 9b respectively. The Melt Flow Index of the compounds at 400°C and 2.16kg was determined. The results are detailed in Table 7 below.

Compounds Example 9a - 9b were injection moulded using a barrel temperature of 370-380°C, nozzle temperature 380°C, mould temperature 180-200°C, holding pressure 30Bar and a screw speed of 45rpm into standard test pieces and their mechanical properties determined The results are detailed in Table 7.

**Table 7**

| Example | Polyetheretherketone Sample (%wt) | Mica (wt%) | Melt Flow Index (g/10min) | Tensile Strength (MPa)^{(c)} | Flexural Strength (MPa)^{(d)} | Flexural Modulus (GPa)^{(d)} | Notched Izod (kJ/m²)^{(e)} |
|---|---|---|---|---|---|---|---|
| 9a | 70^{(a)} | 30 | 61.2 | 84 | 139 | 7.5 | 2.9 |
| 9b | 70^{(b)} | 30 | 25.1 | 85 | 152 | 7.3 | 3.2 |

| | | | | | | | |
|---|---|---|---|---|---|---|---|
| (a) Polyetheretherketone sample Blend 3e(64wt%)+3a(36wt%) (b) Victrex PEEK 150P (c) ISO 527 (d) ISO 178-1993(E) (e) ISO 180 | | | | | | | |

### Example 10a - 10b- Melt Flow Index and Mechanical Properties of highly filled, low viscosity polyetheretherketones

The polyetheretherketones from the 64:36wt% blend of Example 3e and 3a, and Victrex 150P were compounded with 15wt% carbon fibre (SGL Sigrafil C25 S006), 15wt% polytetrafluoroethylene (PTFE) (Asahi Glass Fluoropolymers Fluon FL 1650) and 21wt% polyethersulphone (PES) (BASF Ultrason E3010) on a ZSK 25 WLE Twin Screw Extruder, Examples 10a - 10b respectively. The Melt Flow Index of the compounds at 400°C and 10kg was determined. The results are detailed in Table 8a.

**Table 8a**

| Example | Polyetheretherketone Sample (%wt) | PES (wt%) | Carbon Fibre (wt) | PTFE (wt%) | Melt Flow Index (g/10min) |
|---|---|---|---|---|---|
| 10a | 49^{(a)} | 21 | 15 | 15 | 125.3 |
| 10b | 49^{(b)} | 21 | 15 | 15 | 58.5 |

| | | | | | |
|---|---|---|---|---|---|
| (a) Polyetheretherketone sample Blend 3e(64wt%)+3a(36wt%) (b) Victrex PEEK 150P (c) ISO 527 (d) ISO 178-1993(E) (e) ISO 180 | | | | | |

Compounds Example 10a - 10b were injection moulded using a barrel temperature of 370-380°C, nozzle temperature 380°C, mould temperature 180-200°C, holding pressure 30Bar and a screw speed of 45rpm into standard test pieces and their mechanical properties determined. The results are detailed in Table 8b.

**Table 8b**

| Example | Polyetheretherketone Sample (%wt) | PES (wt%) | Carbon Fibre (wt) | PTFE (wt%) | Tensile Strength (MPa)^{(c)} | Flexural Strength (MPa)^{(d)} | Flexural Modulus (GPa)^{(d)} | Notched Izod (kJ/m²)^{(e)} |
|---|---|---|---|---|---|---|---|---|
| 10a | 49^{(a)} | 21 | 15 | 15 | 152 | 217 | 9.8 | 4.4 |
| 10b | 49^{(b)} | 21 | 15 | 15 | 158 | 239 | 11.0 | 5.5 |

| | | | | | | | | |
|---|---|---|---|---|---|---|---|---|
| (a) Polyetheretherketone sample Blend 3e(64wt%)+3a(36wt%) (b) Victrex PEEK 150P (c) ISO 527 (d) ISO 178-1993(E) (e) ISO 180 | | | | | | | | |

### Example 11 - Preparation of polyetherketone

A 250ml flanged flask fitted with a ground glass Quickfit lid, stirrer/stirrer guide, nitrogen inlet and outlet was charged with 4,4'-difluorobenzophenone (33.49g, 0.153 mole), 4,4'-dihydroxybenzophenone (32.13g, 0.150 mole) and diphenylsulphone (124.5g) and purged with nitrogen for over 1 hour. The contents were then heated under a nitrogen blanket to 160°C to form an almost colourless solution. While maintaining a nitrogen blanket, dried sodium carbonate (16.59g, 0.156 mole) was added. The temperature was raised to 340°C at 1°C/min and held for 2 hour.

The reaction mixture was allowed to cool, milled and washed with acetone and water. The resulting polymer was dried in an air oven at 120°C producing a powder. The polymer had a melt viscosity at 400°C, 1000sec⁻¹ of 0.12 kNsm⁻².

### Example 12a-12d - Large Scale production of polyetherketone

The procedure described in Example 11 was repeated on a larger scale to produce sufficient material to carry out mechanical and melt flow testing. Four batches were produced, Examples 12a-d, with Melt Viscosities measured at 400°C and 1000s⁻¹ of 0.12, 0.10 0.09 and 0.08kNsm⁻² respectively.

### Example 13a-13b Melt Flow Index of polyetherketone

The Melt Flow Index at 400°C and 2.16kg for the polyetherketone sample from Example 12c and a sample of Victrex PEK P22 were measured. The results are detailed in Table 9 below.

**Table 9**

| Example | Polyetherketone Sample | Melt Viscosity (kNsm⁻²) | Melt Flow Index (g/10mins) |
|---|---|---|---|
| 13a | Example 12c | 0.09 | 140 |
| 13b | Victrex PEK P22 | 0.21 | 30 |

### Examples 14a-14e - Mechanical Properties of Low Viscosity polyetherketones

Samples of polyetherketones from Examples 12a, 12b, 12c, 12d and Victrex PEK 22P were injection moulded using a barrel temperature of 380-390°C, nozzle temperature 385°C, mould temperature 155-165°C, holding pressure 30Bar, injection pressure of 140Bar and a screw speed of 45rpm to produce standard test pieces for mechanical property evaluation. The results are detailed in Table 10 below.

**Table 10**

| Example | Polyetherketone Sample | Melt Viscosity (kNsm⁻²) | Tensile Strength (MPa)^{(a)} | Flexural Strength (MPa)^{(b)} | Flexural Modulus (GPa)^{(b)} |
|---|---|---|---|---|---|
| 14a | Example 12a | 0.12 | 110 | 184 | 4.6 |
| 14b | Example 12b | 0.10 | 111 | 183 | 4.6 |
| 14c | Example 12c | 0.09 | 114 | 186 | 4.6 |
| 14d | Example 12d | 0.08 | 112 | 184 | 4.5 |
| 14e | Victrex PEK 22P | 0.21 | 104 | 175 | 4.2 |

| | | | | | |
|---|---|---|---|---|---|
| (a) ASTM D638 (b) ASTM D790 | | | | | |

### Example 15a - 15b - Melt Flow Index and Mechanical Properties of filled, low viscosity polyetherketones

The polyetherketone from Example 12c and Victrex PEK P22 were compounded with 30wt% glass fibre (Owens Corning OCF CS D165A-11C) on a ZSK 25 WLE Twin Screw Extruder, Examples 15a - 15b respectively. The Melt Flow Index of the compounds at 400°C and 2.16kg was determined. The results are detailed in Table 11 below.

Compounds Example 15a - 15b were injection moulded using a barrel temperature of 375-410°C, nozzle temperature 390°C, mould temperature 180-200°C, holding pressure 30Bar and a screw speed of 45rpm into standard test pieces and their mechanical properties determined. The results are detailed in Table 11 below.

**Table 11**

| Example | Polyetherketone Sample (%wt) | Glass Fibre (wt%) | Melt Flow Index (g/10min) | Tensile Strength (MPa^{(c)} | Flexural Strength (MPa^{(d)} | Flexural Modulus (GPa)^{(d)} | Notched Izod (kJ/m²)^{(e)} |
|---|---|---|---|---|---|---|---|
| 8a | 70^{(a)} | 30 | 42 | 187 | 261 | 11.0 | 8.9 |
| 8b | 70^{(b)} | 30 | 12 | 175 | 278 | 10.0 | 10.4 |

| | | | | | | | |
|---|---|---|---|---|---|---|---|
| (a) Polyetherketone Example 12c (b) Victrex PEK P22 (c) ISO 527 (d) ISO 178-1993(E) (e) ISO 180 | | | | | | | |

### Example 16a -16i - Viscosity and Mechanical Properties of highly filled, low viscosity polyetheretherketones

The polyetheretherketone from the 64:36wt% blend of Example 3e and 3a was compounded with 0, 3, 6, 9 and 12% of a liquid crystal polymer (LCP) polymer (Ticona T130, melt point 370°C, glass content 30%), and with additional glass fibre (Owens Corning D165-11C) to obtain total glass content 60%, on a ZSK 25 WLE Twin Screw Extruder, Examples 16a - 16e respectively. The LCP polymer was predried 16 hours at 150°C before compounding.
The addition of LCP T130 was observed to decrease the extruder torque and to improve fibre wet out.

Comparative trials were carried out with Victrex 150P polyketone compounded with 0, 5, 10 and 15% of LCP T130 and with additional glass fibre to make the total glass content 30%; Examples 16f-16i respectively.

The Melt Viscosity of the compounds was determined at 380°C and 1000 s⁻¹, and the Melt Flow Index at 380°C and 2.16kg.

Compounds Example 16a-i were injection moulded using a barrel temperature of 350-360°C, nozzle temperature 365°C, mould temperature 145-155°C, holding pressure 30Bar and a screw speed of 45rpm into standard test pieces and their mechanical properties determined. The results are detailed in Tables 12a and 12b below.

**Table 12a**

| Example | PEEK (wt%) | LCP T130 (wt%) | Glass Fibre (wt%) | LCP in recipe, pphr | ZSK 25 torque % | Melt Flow Index, 380°C (g/10min) | Melt Viscosity 380°C (kNsm⁻²) |
|---|---|---|---|---|---|---|---|
| 16a | 40^{(a)} | 0 | 60 | 0 | 74 | 7.8 | 0.51 |
| 16b | 37.9^{(a)} | 3 | 59.1 | 5.25 | 57 | 7.4 | 0.29 |
| 16c | 35.8^{(a)} | 6 | 58.2 | 10.5 | 50 | 5.5 | 0.26 |
| 16d | 33.7^{(a)} | 9 | 57.3 | 15.75 | 50 | 5.3 | 0.23 |
| 16e | 31.6^{(a)} | 12 | 56.4 | 21 | 50 | 5.1 | 0.21 |
| 16f | 70^{(b)} | 0 | 30 | 0 | 65 | 8.5 | 0.33 |
| 16g | 66.5^{(b)} | 5 | 28.5 | 5 | 45 | 9.5 | 0.30 |
| 16h | 63^{(b)} | 10 | 27 | 10 | 39 | 9.6 | 0.20 |
| 16i | 59.5^{(b)} | 15 | 25.5 | 15 | 34 | 9.1 | 0.19 |

| | | | | | | | |
|---|---|---|---|---|---|---|---|
| (a) PEEK sample Blend 3e(64wt%)+3a(36wt%) (b) Victrex PEEK 150P | | | | | | | |

**Table 12b**

| Example | Tensile Strength (MPa)^{(a)} | Flexural Strength (MPa)^{(b)} | Flexural Modulus (GPa)^{(b)} | Notched Izod kJ/m^{2(c)} | Unnotched Izod kJ/m^{2(c)} |
|---|---|---|---|---|---|
| 16a | 230 | 342 | 20.6 | 10.5 | 50.1 |
| 16b | 234 | 349 | 21.2 | 14.0 | 52.9 |
| 16c | 235 | 340 | 21.3 | 12.8 | 48.9 |
| 16d | 212 | 323 | 21.3 | 12.5 | 45.6 |
| 16e | 216 | 325 | 21.2 | 12.4 | 45.8 |
| 16f | 174 | 265 | 9.8 | 9.1 | 60.4 |
| 16g | 168 | 232 | 10.1 | 8.6 | 43.3 |
| 16h | 163 | 231 | 10.4 | 7.3 | 38.6 |
| 16i | 156 | 221 | 10.6 | 7.5 | 40.0 |

| | | | | | |
|---|---|---|---|---|---|
| (a) ISO 527 (b) ISO 178-1993(E) (c) ISO 180 | | | | | |

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of preparing a composite material, the method comprising:
(i) selecting polymeric material having a melt viscosity (MV) in the range 0.05 to less than 0.10 kNsm⁻²;
(ii) contacting said polymeric material having said MV in the range 0.05 to less than 0.10 kNsm⁻² with a discontinuous fibrous filler or a non-fibrous filler, wherein said discontinuous fibrous filler has an average length of less than 10mm before contact with said polymeric material;
wherein said polymeric material is of a type which includes: unsubstituted phenyl moieties, ketone moieties and ether moieties in the polymeric backbone of said polymeric material, wherein MV is measured using capillary rheometry operating at 400°C at a shear rate of 1000s⁻¹ using a tungsten carbide die, 0.5 x 3.175mm.

2. A method according to claim 1, wherein a batch of composite material is prepared having a weight of at least 10 Kg

3. A method according to claim 1 or claim 2, which comprises forming said composite material into a particulate form.

4. A method according to any preceding claim, wherein said polymeric material has a MV of at least 0.07 kNsm⁻².

5. A method according to any preceding claim, wherein said polymeric material has a MV in the range 0.085 to 0.095 kNsm⁻².

6. A method according to any preceding claim, wherein said polymeric material comprises a repeat unit of formula 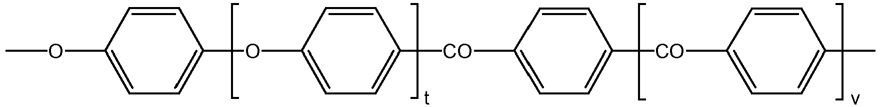 wherein t and v independently represent 0 or 1.

7. A method according to any preceding claim, wherein said polymeric material is polyetheretherketone.

8. A method according to any preceding claim, wherein said filler means includes a non-fibrous filler.

9. A method according to claim 8, wherein said non-fibrous filler is selected from mica, silica, talc, alumina, kaolin, calcium sulfate, calcium carbonate, titanium oxide, ferrite, clay, glass powder, zinc oxide, nickel carbonate, iron oxide, quartz powder, magnesium carbonate, fluorocarbon resin, graphite, carbon powder, nanotubes and barium sulfate.

10. A method according to claim 8 or claim 9 wherein said non-fibrous filler is introduced in the form of powder or flaky particles.

11. A method according to any of claims 1 to 6, wherein the level of crystallinity in said polymeric material is at least 10%.

12. A method according to any of claims 1 to 7 or 11, wherein said fibrous filler is selected from inorganic fibrous materials, non-melting and high-melting organic fibrous materials and carbon fibre.

13. A method according to any preceding claim, wherein said filler means comprises one or more fillers selected from discontinuous glass fiber, discontinuous carbon fibre, carbon black and a fluoro carbon resin.

14. A method according to any preceding claim, wherein said composite material is prepared in a process which comprises extruding a mixture comprising polymeric materials and filler means.

15. A method according to any preceding claim, wherein said composite material includes 65wt% or less of said polymeric material and at least 35wt% of filler means.

16. A method according to any preceding claim, wherein said composite material includes 20 to 60wt% of said polymeric material and 40 to 60wt% of filler means.

17. A method according to any preceding claim, which includes 20 to 50wt% of said polymeric material and 50 to 80wt% of filler means.

18. A method according to any preceding claim, which includes at least 55wt% of filler means.

19. A method according to any preceding claim, wherein the ratio of the wt% of said polymeric material to said filler means is less than 1.

20. A method according to any preceding claim, wherein a mixture prepared after contacting said polymeric material and said filler means includes less than 0.005 parts by weight of an alkaline salt of a Group I or Group II material per 100 parts by weight of said polymeric material.

21. A method according to any preceding claim, wherein a mixture prepared after contacting said polymeric material and filler means includes less than 1wt% of a plasticizer for the polymeric material.

22. A composite material comprising a polymeric material and filler means, wherein said polymeric material has an MV in the range of 0.06 to less than 0.10 kNsm⁻² and is selected from polyetheretherketone, polyetherketone and polyetherketoneketone and said composite material comprises at least 45wt% of filler means selected from a discontinuous fibrous filler means and a non-fibrous filler means, wherein a said discontinuous fibrous filler means has an average length of less than 10mm, wherein MV is measured using capillary rheometry operating at 400°C at a shear rate of 1000s⁻¹ using a tungsten carbide die, 0.5 x 3.175mm, and wherein said polymeric material comprises a discontinuous fibrous filler means.

23. A composite material comprising a polymeric material and filler means, wherein said polymeric material has an MV in the range of 0.06 to less than 0.10 kNsm⁻² and is selected from polyetheretherketone, polyetherketone and polyetherketoneketone and said composite material comprises at least 45wt% of filler means selected from a discontinuous fibrous filler means and a non-fibrous filler means, wherein a said discontinuous fibrous filler means has an average length of less than 10mm, wherein MV is measured using capillary rheometry operating at 400°C at a shear rate of 1000s⁻¹ using a tungsten carbide die, 0.5 x 3.175mm, and wherein said polymeric material comprises polyetheretherketone and a non-fibrous filler means.

24. A method of making a component which comprises extruding or injection moulding a composite material according to any of claims 22 to 23.

25. A method of making a component which has a wall which includes a region having a thickness of 3mm or less, the method comprising:
(a) selecting a composite material as described in any of claims 22 to 23; and
(b) treating said composite material thereby to form said component.

26. A method according to claim 25, wherein said treatment referred to in (b) involves melt processing said precursor material.

## Patentansprüche

1. Verfahren zur Herstellung eines Verbundwerkstoffs, wobei das Verfahren Folgendes umfasst:
(i) Auswählen eines Polymermaterials mit einer Schmelzviskosität (MV) im Bereich von 0,05 bis weniger als 0,10 kNsm⁻²,
(ii) Inkontaktbringen dieses Polymermaterials mit der MV im Bereich von 0,05 bis weniger als 0,10 kNsm⁻² mit einem diskontinuierlichen faserförmigen Füllmittel oder einem nicht faserförmigen Füllmittel, wobei dieses diskontinuierliche Füllmittel vor dem Kontakt mit dem Polymermaterial eine mittlere Länge von weniger als 10 mm aufweist,
wobei das Polymermaterial ein Typ ist, der Folgendes umfasst: unsubstituierte Phenyleinheiten, Ketoneinheiten und Ethereinheiten im Polymergrundgerüst des Polymermaterials, wobei die MV unter Verwendung von Kapillarrheometrie gemessen wird, die bei 400 °C mit einer Schergeschwindigkeit von 1000 s⁻¹ unter Verwendung eines Wolframcarbid-Stempels mit 0,5 x 3,175 mm betrieben wird.

2. Verfahren nach Anspruch 1, wobei eine Partie des Verbundwerkstoffs mit einem Gewicht von mindestens 10 kg hergestellt wird.

3. Verfahren nach Anspruch 1 oder Anspruch 2, das das Bilden dieses Verbundwerkstoffs in einer bestimmten Form umfasst.

4. Verfahren nach jeglichem vorhergehenden Anspruch, wobei das Polymermaterial eine MV von mindestens 0,07 kNsm⁻² aufweist.

5. Verfahren nach jeglichem vorhergehenden Anspruch, wobei das Polymermaterial eine MV im Bereich von 0,085 bis 0,095 kNsm⁻² aufweist.

6. Verfahren nach jeglichem vorhergehenden Anspruch, wobei das Polymermaterial eine sich wiederholende Einheit der folgenden Formel aufweist 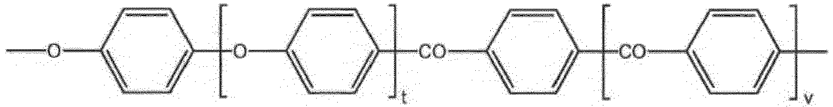 wobei t und v unabhängig voneinander 0 oder 1 darstellen.

7. Verfahren nach jeglichem vorhergehenden Anspruch, wobei das Polymermaterial Polyetheretherketon ist.

8. Verfahren nach jeglichem vorhergehenden Anspruch, wobei das Füllmittel ein nicht faserförmiges Füllmittel umfasst.

9. Verfahren nach Anspruch 8, wobei dieses nicht faserförmige Füllmittel aus Glimmer, Siliciumdioxid, Talkum, Aluminiumdioxid, Kaolin, Calciumsulfat, Calciumcarbonat, Titanoxid, Ferrit, Ton, Glaspulver, Zinkoxid, Nickelcarbonat, Eisenoxid, Quarzpulver, Magnesiumcarbonat, Fluorkohlenstoff-Harz, Graphit, Kohlenstoffpulver, Nanoröhren und Bariumsulfat ausgewählt ist.

10. Verfahren nach Anspruch 8 oder Anspruch 9, wobei dieses nicht faserförmige Füllmittel in der Form eines Pulvers oder von flockigen Partikeln eingeführt wird.

11. Verfahren nach jeglichem der Ansprüche 1 bis 6, wobei der Kristallinitätsgrad in diesem Polymermaterial mindestens 10 % beträgt.

12. Verfahren nach einem der Ansprüche 1 bis 7 oder 11, wobei das faserförmige Füllmittel aus anorganischen, faserförmigen Materialien, nicht schmelzenden und hoch schmelzenden organischen faserförmigen Materialien und Kohlenstofffasern ausgewählt ist.

13. Verfahren nach jeglichem vorhergehenden Anspruch, wobei dieses Füllmittel ein oder mehrere Füllmittel umfasst, die aus diskontinuierlichen Glasfasern, diskontinuierlichen Kohlenstofffasern, Kohlenstoffschwarz und einem Fluorkohlenstoff-Harz ausgewählt sind.

14. Verfahren nach jeglichem vorhergehenden Anspruch, wobei der Verbundwerkstoff in einem Prozess hergestellt wird, der das Extrudieren einer Mischung umfasst, die Polymermaterialien und Füllmittel umfasst.

15. Verfahren nach jeglichem vorhergehenden Anspruch, wobei der Verbundwerkstoff mindestens 65 Gew.-% oder weniger Polymermaterial und mindestens 35 Gew.-% Füllmittel umfasst.

16. Verfahren nach jeglichem vorhergehenden Anspruch, wobei der Verbundwerkstoff mindestens 20 bis 60 Gew.-% Polymermaterial und 40 bis 60 Gew.-% Füllmittel umfasst.

17. Verfahren nach jeglichem vorhergehenden Anspruch, das 20 bis 50 Gew.-% des Polymermaterials und 50 bis 80 Gew.-% Füllmittel umfasst.

18. Verfahren nach jeglichem vorhergehenden Anspruch, das mindestens 55 Gew.-% Füllmittel umfasst.

19. Verfahren nach jeglichem vorhergehenden Anspruch, wobei das Verhältnis der Gew.-% von Polymermaterial zu Füllmittel kleiner als 1 ist.

20. Verfahren nach jeglichem vorhergehenden Anspruch, wobei eine Mischung, die nach dem Inkontaktbringen des Polymermaterials und des Füllmittels hergestellt wurde, weniger als 0,005 Gewichtsteile eines Alkalisalzes eines Gruppe-I- oder Gruppe-II-Materials pro 100 Gewichtsteile des Polymermaterials umfasst.

21. Verfahren nach jeglichem vorhergehenden Anspruch, wobei eine Mischung, die nach dem Inkontaktbringen des Polymermaterials und des Füllmittels hergestellt wurde, weniger als 1 Gew.-% eines Weichmachers für das Polymermaterial umfasst.

22. Verbundwerkstoff, umfassend ein Polymermaterial und Füllmittel, wobei das Polymermaterial eine MV im Bereich von 0,06 bis weniger als 0,10 kNsm⁻² aufweist und aus Polyetheretherketon, Polyetherketon und Polyetherketonketon ausgewählt ist, und wobei der Verbundwerkstoff mindestens 45 Gew.-% Füllmittel umfasst, das aus einem diskontinuierlichen faserförmigen Füllmittel und einem nicht faserförmigen Füllmittel ausgewählt ist, wobei dieses diskontinuierliche faserförmige Füllmittel eine mittlere Länge von weniger als 10 mm aufweist, wobei die MV unter Verwendung von Kapillarrheometrie gemessen wird, die bei 400°C mit einer Schergeschwindigkeit von 1000 s⁻¹ unter Verwendung eines Wolframcarbid-Stempels mit 0,5 x 3,175 mm betrieben wird, und wobei das Polymermaterial ein diskontinuierliches faserförmiges Füllmittel umfasst.

23. Verbundwerkstoff, umfassend ein Polymermaterial und Füllmittel, wobei das Polymermaterial eine MV im Bereich von 0,06 bis weniger als 0,10 kNsm⁻² aufweist und aus Polyetheretherketon, Polyetherketon und Polyetherketonketon ausgewählt ist, und wobei der Verbundwerkstoff mindestens 45 Gew.-% Füllmittel umfasst, das aus einem diskontinuierlichen faserförmigen Füllmittel und einem nicht faserförmigen Füllmittel ausgewählt ist, wobei dieses diskontinuierliche faserförmige Füllmittel eine mittlere Länge von weniger als 10 mm aufweist, wobei die MV unter Verwendung von Kapillarrheometrie gemessen wird, die bei 400 °C mit einer Schergeschwindigkeit von 1000 s⁻¹ unter Verwendung eines Wolframcarbid-Stempels mit 0,5 x 3,175 mm betrieben wird, und wobei das Polymermaterial ein Polyetheretherketon und ein nicht faserförmiges Füllmittel umfasst.

24. Verfahren zur Herstellung einer Komponente, das das Extrudieren oder Spritzgießen eines Verbundwerkstoffs nach einem der Ansprüche 22 bis 23 umfasst.

25. Verfahren zur Herstellung einer Komponente, die eine Wand aufweist, die einen Bereich mit einer Dicke von 3 mm oder weniger aufweist, wobei das Verfahren Folgendes umfasst:
(a) Auswählen eines Verbundwerkstoffs wie in einem der Ansprüche 22 bis 23 beschrieben, und
(b) Behandeln dieses Verbundwerkstoffs, um dadurch diese Komponente zu bilden.

26. Verfahren nach Anspruch 25, wobei diese Behandlung, die in (b) genannt ist, eine Schmelzverarbeitung des Vorläufermaterials umfasst.

## Revendications

1. Procédé de préparation d'un matériau composite, le procédé comprenant :
(i) la sélection de matière polymère présentant une viscosité à l'état fondu (MV) comprise entre 0,05 et moins de 0,10 kN.s.m⁻²;
(ii) la mise en contact de ladite matière polymère présentant ladite MV dans l'intervalle de 0,05 à moins de 0,10 kN.s.m⁻² avec une charge fibreuse discontinue ou une charge fibreuse discontinue, ladite charge fibreuse discontinue ayant une longueur moyenne inférieure à moins de 10 mm avant contact avec ladite matière polymère ;
ladite matière polymère étant d'un type qui comprend : des fragments phényle non substitués, des fragments de cétone et des fragments éther dans le squelette polymère de ladite matière polymère, la MV étant mesurée par rhéométrie capillaire fonctionnant à 400 °C à un taux de cisaillement de 1 000 s⁻¹ grâce à une matrice de carbure de tungstène, 0,5 x 3,175 mm.

2. Procédé selon la revendication 1, dans lequel un lot de matériau composite est préparé avec un poids d'au moins 10 kg.

3. Procédé selon la revendication 1 ou la revendication 2, qui comprend la formation dudit matériau composite sous une forme de particule.

4. Procédé selon l'une quelconque des revendications précédentes, dans lequel ladite matière polymère a un MV d'au moins 0,07 kN.s.m-².

5. Procédé selon l'une quelconque des revendications précédentes, dans lequel ladite matière polymère a un MV compris entre 0,085 et 0,095 kN.s.m⁻².

6. Procédé selon l'une quelconque des revendications précédentes, dans lequel ladite matière polymère comprend un motif de répétition de formule 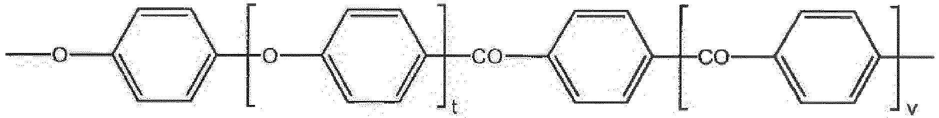 où t et v représentent indépendamment 0 ou 1.

7. Procédé selon l'une quelconque des revendications précédentes, dans lequel ladite matière polymère est la polyétheréthercétone.

8. Procédé selon l'une quelconque des revendications précédentes, dans lequel ledit moyen de charge contient une charge non fibreuse.

9. Procédé selon la revendication 8, dans lequel ladite charge non fibreuse est choisie parmi le mica, la silice, le talc, l'alumine, le kaolin, le sulfate de calcium, le carbonate de calcium, l'oxyde de titane, la ferrite, l'argile, la poudre de verre, l'oxyde de zinc, le carbonate de nickel, l'oxyde de fer, la poudre de quartz, le carbonate de magnésium, la résine de fluorocarbone, le graphite, la poudre de carbone, les nanotubes et le sulfate de baryum.

10. Procédé selon la revendication 8 ou la revendication 9, dans lequel ladite charge non fibreuse est introduite sous la forme de poudre ou de particules floconneuses.

11. Procédé selon l'une quelconque des revendications 1 à 6, dans lequel le niveau de cristallinité dans ladite matière polymère vaut au moins 10%.

12. Procédé selon l'une quelconque des revendications 1 à 7 ou 11, dans lequel ladite charge fibreuse est choisie parmi les matières fibreuses inorganiques, les matières fibreuses organiques hors fusion et à haute température de fusion et la fibre de carbone.

13. Procédé selon l'une quelconque des revendications précédentes, dans lequel ledit moyen de charge contient au moins une charge choisie parmi la fibre de verre discontinue, la fibre de carbone discontinue, le noir de carbone et une résine de fluoro carbone.

14. Procédé selon l'une quelconque des revendications précédentes, dans lequel ledit matériau composite est préparé lors d'un processus qui comprend l'extrusion d'un mélange comprenant des matières polymères et un moyen de charge.

15. Procédé selon l'une quelconque des revendications précédentes, dans lequel ledit matériau composite contient 65 % en poids ou moins de ladite matière polymère et au moins 35 % en poids de moyen de charge.

16. Procédé selon l'une quelconque des revendications précédentes, dans lequel ledit matériau composite contient 20 à 60 % en poids de ladite matière polymère et 40 à 60 % en poids de moyen de charge.

17. Procédé selon l'une quelconque des revendications précédentes, qui comprend 20 à 50 % de ladite matière polymère et 50 à 80 % de moyen de charge.

18. Procédé selon l'une quelconque des revendications précédentes, qui comprend au moins 55 % en poids d'un moyen de charge.

19. Procédé selon l'une quelconque des revendications précédentes, dans lequel le rapport du pourcentage en poids de ladite matière polymère audit moyen de charge est inférieur à 1.

20. Procédé selon l'une quelconque des revendications précédentes, dans lequel un mélange préparé après mise en contact de ladite matière polymère et dudit moyen de charge comprend moins de 0,005 parties en poids d'un sel alcalin d'une matière du groupe I ou du groupe II pour 100 parties en poids de ladite matière polymère.

21. Procédé selon l'une quelconque des revendications précédentes, dans lequel un mélange préparé après mise en contact de ladite matière polymère et dudit moyen de charge comprend moins de 1 % en poids d'un agent plastifiant destiné à la matière polymère.

22. Matériau composite contenant une matière polymère et un moyen de charge, ladite matière polymère ayant un MV compris entre 0,06 et moins de 0,10 kN.s.m⁻² et étant choisie parmi la polyétheréthercétone, la polyéthercétone et la polyéthercétonecétone et ledit matériau composite contient au moins 45 % en poids d'un moyen de charge choisi parmi un moyen de charge à fibre discontinue et un moyen de charge non fibreux, un moyen de charge fibreux discontinu a une longueur moyenne inférieure à 10 mm, MV étant mesuré grâce à une rhéométrie capillaire fonctionnant à 400 °C sous un taux de cisaillement de 1 000 s⁻¹ grâce à une matrice de carbure de tungstène, 0,5 x 3,175 mm, et où ladite matière polymère contient un moyen de charge fibreux discontinu.

23. Matériau composite contenant une matière polymère et un moyen de charge, ladite matière polymère a un MV compris entre 0,06 et moins de 0,10 kN.s.m⁻² et est choisi parmi la polyétheréthercétone, la polyéthercétone et la polyétheréthercétonecétone et où ledit matériau composite contient au moins 45 % en poids de moyen de charge choisi parmi un moyen de charge fibreuse discontinue et un moyen de charge non fibreuse, un moyen de charge fibreux discontinu ayant une longueur moyenne inférieure à 10 mm, le MV étant mesuré par une rhéométrie capillaire fonctionnant à 400 °C à un taux de cisaillement de 1 000 s⁻¹ grâce à une matrice de carbure de tungstène, 0,5 x 3,175 mm, et où ladite matière polymère contient de la polyétheréthercétone et un moyen de charge non fibreuse.

24. Procédé de fabrication d'un composant qui contient l'extrusion ou le moulage par injection d'un matériau composite selon l'une quelconque des revendications 22 et 23.

25. Procédé de fabrication d'un composant qui contient une paroi qui comprend une région présentant une épaisseur de 3 mm au plus, le procédé comprenant :
(a) le choix d'un matériau composite tel que décrit dans l'une quelconque des revendications 22 à 23 ; et
(b) le traitement dudit matériau composite, ce qui forme ledit composant.

26. Procédé selon la revendication 25, dans lequel ledit traitement dont il est question en (b) implique le traitement à l'état fondu dudit matériau précurseur.
